# EUROPEAN PATENT SPECIFICATION

(11) **EP 2 043 548 B1**
(45) Date of publication and mention of the grant of the patent: **14.09.2011**
(21) Application number: 08716719.3
(22) Date of filing: 28.03.2008
(51) Int. Cl.: A61C 19/06

(54) **DENTAL TREATMENT DEVICE**
ZAHNBEHANDLUNGSVORRICHTUNG
DISPOSITIF DE TRAITEMENT DENTAIRE

(30) Priority: 28.03.2007 EP 07006420; 23.05.2007 EP 07010242; 29.11.2007 EP 07023185
(43) Date of publication of application: 08.04.2009
(73) Proprietor: Krebber, Burghardt, 86899 Landsberg/Lech (DE)
(72) Inventor: Krebber, Burghardt, 86899 Landsberg/Lech (DE)
(74) Representative: Hartz, Nikolai
(86) International application number: PCT/EP2008/002517
(87) International publication number: WO 2008/116668

(56) References cited:
- EP-A- 1 506 746
- DE-U1-202005 012 281
- US-A1- 2006 110 710

## Description

### Field of the Invention

The present invention relates a device for treating dental hard and soft tissues with a flow of ozone containing gas. The present invention also relates to an applicator for such a device. Moreover, a method of treatment of dental hard and soft tissues of a patient by applying a continuous pulsing flow of ozone is disclosed. Finally, a method of treatment of a dental tissue of a patient by applying a continuous flow of ozone containing gas is disclosed.

### Background of the invention

US2006/01 10710 discloses an endodontic ozone therapy. A dental system for supplying a solution to a user's teeth is known from EP-A-1 506 746.

Decay of hard dental tissue is caused by microorganisms propagating in the vicinity of the hard dental tissue. Dental caries is based on the acid dissolution of enamel, dentine or cementum as a consequence of the metabolism of microorganisms living within deposits on the teeth known as plaque. Moreover, infections of soft dental tissue are caused by microorganisms propagating in the soft dental tissue.

In order to interrupt the progress of hard dental tissue decay, the decayed hard dental tissue including the microorganisms are commonly removed by a drilling treatment and the cavities thereby formed are sealed and filled with a restorative material. Dental treatment by drilling a tooth causes significant discomfort and anxiety to the patient. Moreover, the drilling treatment not only removes decayed dental tissue, but also healthy dental tissue. In addition, materials used for restorations may be problematic in that e.g. gold and ceramic are expensive and present a technical challenge for the practitioner whereas amalgam is potentially toxic and may cause allergic reactions. Therefore, alternative methods for the control of bacterial growth on and inside hard and soft dental tissue are desired.

In this context, the application of ozone to dental tissue was considered.

W002078644 suggests the use of ozone in the treatment of dental and oral conditions. Ozone is a strongly oxidizing gas having bactericidal effects. However, ozone is also a highly toxic gas which may lead to severe poisoning when inhaled by a patient. Therefore, the application of ozone to hard and soft dental issue in the mouth of the patient requires applicator devices which are suitable for delivering a sufficiently high ozone concentration to the decaying dental tissue while at the same time avoiding contamination of the patient.

A dental applicator is known (OzonyTron commercially available from Mymed, Germany and DE 20 2005 012 281 U1) which generates small amounts of ozone gas in a glass nozzle to be positioned in dose proximity to the dental tissue to be treated. The ozone diffuses from an orifice of the nozzle so that a concentration gradient is formed wherein a bactericidally effective dose of ozone can only be expected within a distance of less than 3 mm from the orifice. According to this technology, a flow of ozone containing gas is not used. Given that only minor amounts of ozone are generated by the device and given that the treatment time does not exceed about 40 seconds, the risk of a contamination of the patient with ozone is believed to be acceptable despite the use of an open system. However, ozone is inevitably inhaled by the patient since means for eliminating gaseous ozone from the mouth of the patient are not provided. Furthermore, micro currents due to the ozone generation in a plasma inside the applicator nozzle placed in dose proximity to the dental issue may be felt by the patient as an uncomfortable side effect. Finally, since the nozzle is made of a delicate glass structure, the device may break during the application of ozone.

A further dental applicator is known which uses a silicon cup placed on a dental surface to be treated. The silicon cup is connected to a vacuum pump for creating a vacuum inside a treatment chamber defined by the sleeve and the dental surface to be treated. The silicon cup forms a tight seal when a vacuum is applied. As soon as a predetermined vacuum is established, the device generates ozone and releases small amounts inside the treatment chamber for treatment of the dental surface. Ozone generation is discontinued when the pressure inside the silicon cup rises, indicating a leakage of the seal. Therefore, the performance of the applicator depends on the quality of the tight seal formed between the silicon cup and the dental surface to be treated. Given that decaying dental surfaces may not be able to form a tight seal due to the complicated surface topology, the tight seal may often not be reliably formed so that an application of ozone does not efficiently take place. As a remedy, a range of different silicone cups are provided which lead to further complications of the procedure.

Known dental applicators are not capable of administering ozone over an extended period of time so that a significant amount of ozone may be safely and efficiently delivered to decaying dental tissue in the treatment of deep caries, gingivitis and parodontitis.

Moreover, known dental applicators are not capable of treating a large dental surface over an extended period of time without the risk of contamination of the patient.

Finally, known dental applicators are not able of administering ozone over an extended period of time to soft tissue and saliva so that a significant amount of ozone may be safely and efficiently delivered and reach infected soft dental tissue gingivitis parodontitis and by diffusion in the treatment of granuloma.

### Summary of the invention

It is the problem of the present invention to provide a device for safe and efficient treatment of hard and soft dental tissues with a pulsing flow of ozone.

A further problem of the present invention is to provide a device for treating hard and soft dental tissues with a pulsating flow of ozone over an extended period of time with a device which may be easily hand led and does not cause discomfort to the patient.

It is a further problem of the present invention to provide a device for treating a large surface of hard and soft dental tissues or a dental surface which is difficult to access with a pulsing flow of ozone over an extended period of time.

The present invention provides a device as defined by claim 2, for treating dental hard and soft tissues with a continuous pulsing flow of ozone containing gas, comprising
(a) an ozone generator for generating an ozone containing gas,
(b) a first pump being in fluid flow communication with the ozone generator for generating a flow of ozone containing gas,
(c) an applicator as defined by claim 1, having a surface suitable for forming with the dental tissue and gums to be treated and inner wall of the applicator a treatment chamber having at least one inlet orifice being in fluid flow communication with the ozone generator and the first pump and having at least one outlet orifice, and
(d) a second pump being in fluid flow communication with the outlet orifice of the applicator for removing gas from the treatment chamber, whereby said second pump has a second throughput and the first pump has a first throughput whereby the ratio of the second throughput to the first throughput is at least 1.5 : 1.

The present invention is based on the recognition that dental caries, parodontitis gingivitis and granuloma (pus at the teeth roots or in gums) and more may be treated by exposing a dental tissue suffering from undesired bacterial growth to a continuous flow of ozone containing gas, preferably a continuous pulsing flow of ozone containing gas. In case of deep dental caries, parodontitis, gingivitis and granuloma, ozone may diffuse across plaque or hard and soft tissue before reaching the microorganisms.

Moreover, the present invention is based on the recognition that the success of space between the teeth, the root canals, and the cavities treatment may be significantly increased when the space between the teeth, the root canals, and the cavities is treated with a pulsing flow of ozone containing gas.

The present invention is further based on the recognition that a pulsing continuous flow of ozone may be applied to a dental surface over an extended period of time without the risk of contamination of the patient when a combination of two pumps is used so that a first pump having a first throughput introduces an ozone containing gas into a treating chamber whereby a second pump having a higher throughput removes ozone containing gas from the treating chamber including air which has entered into the treating chamber through not tight portions of the seal between the applicator and the dental tissue or the gums. The dental applicator forming the treating chamber is prefabricated by an injection moulding machine for repeated applications of ozone in the prevention and/or treatment of dental caries, gingivitis, parodontitis and granuloma or any infection in the gums.

The present invention uses a partial pressure of ozone in the ozone containing gas which is in a range previously unattainable when applying a vacuum and too dangerous to use in an open system. The high partial pressure of ozone in the continuous, pulsing flow of oxygen as provided by the device of the present invention forces the ozone deep into the dental tissue and gums whereby an efficient treatment of deep caries, gingivitis, parodontitis and granuloma or any infection in the gums is possible without the need for drilling treatment or surgery. Accordingly it is possible to efficiently interrupt infection and decay of dental tissue or gums due to bacteria eliminating while at the same time avoiding the pain and anxiety associated with a drilling treatment and surgery as well as avoiding unnecessary loss of healthy dental tissue or entire teeth.

The present invention also provides an applicator for a device according to the invention.

### Brief Description of the Figures

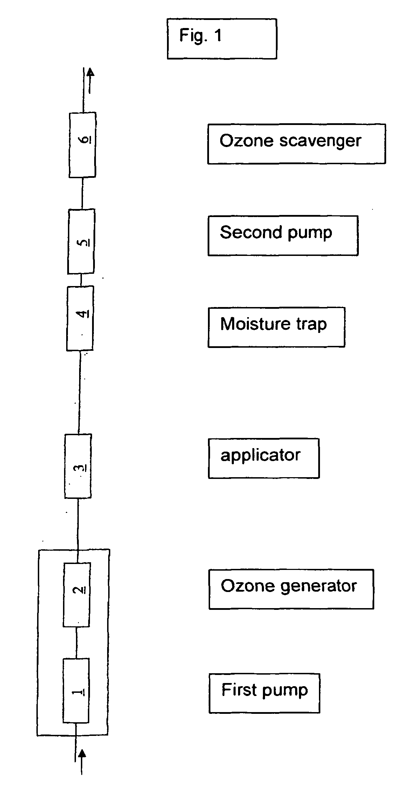

Figure 1 is a schematic representation of an embodiment of the device according to the invention.

### Description of the preferred embodiments

The present invention provides a device for treating a dental tissue and gums with a continuous pulsing flow of ozone containing gas. The gas may be air having an oxygen content in the range of from 20 to 99 percent by volume. Accordingly, pure air may preferably be used for the ozone generator or a mixture comprising air and additional pure oxygen gas.

The dental tissue to be treated includes hard and soft tissues. Hard tissue includes dentin and enamel as well as any restoration permanently provided on the dentin or enamel. Soft tissue includes any tissue in the mouth which is not hard tissue including gums, the inside of pockets formed by the soft tissue. Treatment of dental tissue within the meaning of the present invention includes the exposure of dental surfaces to ozone molecules in a concentration suitable for controlling bacterial growth. Preferably, the treatment also includes the penetration of the dental surface by the ozone so that bacterial growth below the surface of the dental tissue and the gums may be controlled. Since anaerobic bacteria propagate in an environment where oxygen is not available, the treatment according to the present invention may be directed to providing an exposure of such bacteria even in such anaerobic environments. For this purpose, the dental tissue is exposed to a high ozone partial pressure over a prolonged period of time. Accordingly, it is possible to not only treat and prevent caries and other infections to the surface, but also to control bacteria causing caries in layers below the dental and gum tissue surfaces.

The device according to the invention comprises an ozone generator for generating an ozone containing gas. The ozone generator may be a conventional ozone generator using an electric discharge for cleaving oxygen molecules in a plasma. Preferably, the ozone generator allows controlling the rate of ozone generation in order to adjust the ozone concentration in the ozone containing gas. The ozone containing gas generated by the ozone generator preferably has an ozone concentration of from 50 to 20.000 ppm, more preferably an ozone concentration of from 100 to 10.000 ppm. For safety reasons, the ozone generator is preferably arranged in series with the first and the second pump so that the ozone generator may only be activated when the pumps are running so that a flow of gas is present which prevents the ozone from being discharged from the ozone generator in an uncontrolled manner.

The device according to the present invention further comprises a first pump being in fluid flow communication with the ozone generator for generating a flow of ozone containing gas. Preferably, the first pump (1) is arranged so as to discharge a stream of gas such as air into the ozone generator for providing a continuous flow of ozone containing gas downstream from the first pump. The first pump has a first throughput.

Moreover, the first pump has a first pumping speed. Preferably, the first pump has a pumping speed in the range of from 1 to 10 l/min, more preferably from 2 to 6 l/min.

The device according to the present invention further comprises an applicator available in different sizes having a surface suitable for forming with the dental tissue and the gums to be treated a chamber having at least one inlet orifice being in fluid flow communication with the ozone generator and the first pump and having at least one outlet orifice being in fluid flow communication with the second pump.

The applicator is prefabricated by injection moulding machines, available in different sizes. It is to be used for the complete row of teeth, both for the upper and lower jaw. The applicator may be U-shaped. The applicator may be designed to fit to nearly all patients. In a typical implementation of an applicator, the ozone containing gas is led through an orifice to the front teeth. The ozone flows right and left along the teeth in the direction of the ends of the applicator. A second orifice in the front side of the applicator may be connected to invisible integrated ducts in the applicator wall. These ducts may lead to the right and left ends of the applicator. At the ends of the applicator these ducts are open to the inside of the applicator from where the gas with remaining ozone is sucked out of the applicator. Due to the higher outgoing suction power compared to the incoming pressure, no ozone gets into the patient's mouth. Hence, no ozone can be inhaled by the patient. The applicator should consist of sterilizable material.

Moreover, the device of the present invention may further comprise a moisture trapping means which is in fluid communication with the outlet orifice of the applicator for removing gas from the treatment chamber. The moisture trapping means may be a container were the input orifice is separated from the output orifice so that the moisture remains in the container and the moisture is separated from the ozone containing gas.

Alternatively, the container may contain a drying agent or a cold surface for eliminating any water vapour remaining in the flow of ozone containing gas discharged from the treatment chamber before entering the second pump.

The device according to the present invention further comprises a second pump being in fluid flow communication with the outlet of the moisture trapping means. The second pump has a second throughput. The ratio of the second throughput to the first throughput is at least 1.5 : 1, preferably 2 : 1. Moreover, the second pump preferably has a pumping speed in the range of from 1.5 to 15 l/min.

In one embodiment, the activation of the second pump is a necessary condition for the possibility of activating the ozone generator so that the contamination of the patient may be excluded.

The device of the present invention may further comprise an ozone scavenging means which is in fluid communication with the outlet orifice of the second pump. The scavenging means may contain a reducing agent which eliminates any ozone remaining in the flow of ozone containing gas discharged from the treatment chamber.

The device of the present invention further comprises one or more control means for controlling the throughput of the first and/or second pump. The one or more control means of the device of the present invention may periodically change the ratio of the first throughput to the second throughput so that the speed of the continuous flow and consequently the pressure of ozone containing gas periodically changes in the treatment chamber. For instance, the second pump can be switched off all 2 seconds for 0.3 second. Furthermore, the one or more control means may periodically reduce the throughput followed by an increase of the throughput of the pump. The reduction and increase of the throughput may occur with a frequency of from 1 to 200 cycles per minutes, preferably from 20 to 40 cycles, or, in another embodiment, 30 cycles per minute. The periodical changes of the speed of the continuous flow of ozone containing gas in the treatment chamber by one or more control means improves the contact of dental surfaces in the treatment chamber with ozone and thereby increases the efficiency of the treatment. So the ozone can penetrate the space between the teeth, the root canals, the cavities and more.

In a device of the invention, the ozone generator, the first pump the second pump, the scavenging means and the control means may be provided in a housing. At the front panel side of the housing there is a hollow forming lid, which is connected to the housing by a hinge. The lid is easy to open and close as a reversibly sealable hollow chamber. During the treatment of the patient the lid is open and so it gives access to front panel, where all required controls are installed.

Subsequent to the treatment of the patient, the device of the invention may be contaminated and needs to be sterilized.

For sterilizing purposes the reversibly sealable chamber is closed and the interior of the chamber being in fluid communication with the ozone generator, whereby the inner wall of the chamber at least partially comprises surfaces of the device exposed to the environment during use of the device for treating a dental tissue.

For this sterilizing purpose, the means for controlling the operation of the ozone generator, the first pump and the second pump, when the reversibly sealable chamber is sealed may be set so as to introduce ozone into the reversibly sealable chamber over a predetermined period of time. During this period, the reversibly sealable chamber may further contain the applicator, tubing or other contaminated devices.

After the predetermined period of time, any excess ozone contained in the reversibly sealable chamber may be eliminated by either reversing the sealing of the chamber, or by using one or more orifices in the housing provided for eliminating ozone contained in the reversibly sealable chamber after the treatment of surfaces of the device exposed to the environment during use of the device for treating a dental tissue. The need for additional sterilizing equipment is not required.

Moreover, the housing may comprise one or more orifices for eliminating ozone contained in the reversibly sealable chamber after the treatment of surfaces of the device exposed to the environment during use of the device for treating a dental tissue.

The device according to the present invention may be part of a system comprising a device for treating a dental tissue with a continuous pulsing flow of ozone containing gas, and a plurality of applicators.

The device for treating a dental tissue with a continuous pulsing flow of ozone containing gas may be used as follows.

Prior to activating the ozone generator the applicator is placed in the patient's mouth so that a treating chamber is formed by the inner surface of the applicator and the hard and soft dental tissue and the gums to be treated. Subsequently, a gas flow may be initiated by activating the first pump and the second pump. Provided that the gas flow is established, the ozone generator may be activated. Accordingly the flow of gas then will include an amount of ozone to which the dental surface and the gums inside the treating chamber are exposed. The treatment of dental tissue and gums of a patient by applying a continuous pulsing flow of ozone for a period of time may be applied for an adjustable predetermined time in the range of from 1 minute to 60 minutes. During the treatment of the patient, the continuous flow of ozone containing gas may be applied by periodically pulsing changing the flow speed of gas.

Figure 1 shows a schematic representation of a preferred embodiment of the device according to the invention. A first pump 1 is in fluid communication with an ozone generator 2. The first pump 1 and the ozone generator 2 may be combined in a single device for providing a flow of ozone gas. The ozone generator 2 is in fluid flow communication with the dental applicator 3. The dental applicator 3 is in fluid flow communication with a moisture trapping means 4 which dries the flow of gas from the dental device. The moisture trapping means 4 is in fluid flow communication with the second pump 5. The output of the second pump 5, which is a suction pump for the applicator, is in fluid flow communication with an ozone scavenging means 6 for eliminating excess ozone present in the flow of gas.

## Claims

1. A dental applicator (3) for multiple teeth for treating hard and soft dental tissue with a continuous flow of ozone containing gas, said applicator having a surface suitable for forming with the hard and soft dental tissue of multiple teeth to be treated a treatment chamber having an inlet orifice for providing fluid flow communication with an ozone generator (2) and a first pump (1) and having an outlet orifice for being in fluid flow communication with a second pump to remove gas from the treatment chamber, whereby the applicator is prefabricated by injection molding.

2. A device for treating a dental tissue with a continuous flow of ozone containing gas, comprising
a) an ozone generator (2) for generating an ozone containing gas,
b) a first pump (1) being in fluid flow communication with the ozone generator for generating a flow of ozone containing gas,
c) an applicator (3) as defined by claim 1,
d) a second pump (5) being in fluid flow communication with the outlet orifice of the applicator for removing gas from the treatment chamber, whereby said second pump has a second throughput and the first pump has a first throughput whereby the ratio of the second throughput to the first throughput is at least 1.5: 1;
e) one or more control means for controlling the throughput of the first and/or second pump, wherein the one or more control means periodically changes the ratio of the second throughput to the first throughput so that the speed and accordingly the pressure of the continuous flow of ozone containing gas periodically changes in the treatment chamber.

3. The device according to claim 2, wherein the one or more control means periodically reduces the throughput followed by an increase of the throughput of the pump.

4. The device according to claim 3, wherein the reduction and increase of the throughput occurs with a frequency of from 1 to 200 cycles per minutes.

5. The device according to any one of claims 2 to 4, wherein the ozone containing gas generated by the ozone generator has an ozone concentration of from 50 to 20000 ppm.

6. The device according to any one of claims 2 to 5, wherein the gas is air having an oxygen content in the range of from 20 to 99 percent by volume.

7. The device according to any one of claims 2 to 6, wherein the first pump has a pumping speed in the range of from 1 to 10 l/min.

8. The device according to any of claims 2 to 7 wherein the second pump has a pumping speed in the range of from 1.5 to 15 l/min.

9. The device according to any one of claims 2 to 8 which further comprises a moisture trapping means downstream from the outlet orifice of the applicator and upstream from the second pump.

10. The device according to any one of the claims 2 to 9 which further comprises an ozone scavenging means downstream from the second pump.

11. The device according to claim 2, wherein the one or more control means periodically changes the ratio of the second throughput to the first throughput in a range of from 6:1 to 1.5:1 so that the speed and/or pressure of the continuous flow of ozone containing gas periodically changes in the treatment chamber.

## Patentansprüche

1. Dentalapplikator (3) für mehrere Zähne zur Behandlung von hartem und weichem Dentalgewebe mit einem kontinuierlichen Strom eines ozonhaltigen Gases, wobei der Applikator eine Oberfläche aufweist, die geeignet ist zur Ausbildung mit dem harten und weichem Dentalgewebe mehrerer Zähne, das behandelt werden soll, einer Behandlungskammer mit einer Einlassöffnung zur Bereitstellung einer Fließverbindung mit einem Ozongenerator (2) und einer ersten Pumpe (1), sowie mit einer Auslassöffnung die in Fließverbindung steht mit einer zweiten Pumpe, um Gas aus der Behandlungskammer abzuführen, wobei der Applikator mit Spritzguss vorgefertigt ist.

2. Vorrichtung zur Behandlung von Dentalgewebe mit einem kontinuierlichen Strom eines ozonhaltigen Gases, umfassend
a) einen Ozongenerator (2) zur Erzeugung eines ozonhaltigen Gases,
b) eine erste Pumpe (1), die in Fließverbindung steht mit dem Ozongenerator zur Erzeugung eines Stroms eines ozonhaltigen Gases,
c) einen Applikator (3), wie er in Anspruch 1 definiert wird,
d) eine zweite Pumpe (5), die in Fließverbindung steht mit der Auslassöffnung des Applikators zur Entfernung von Gas aus der Behandlungskammer, wobei die zweite Pumpe einen zweiten Durchsatz aufweist und die erste Pumpe einen ersten Durchsatz aufweist, wobei das Verhältnis des zweiten Durchsatzes zu dem ersten Durchsatz mindestens 1,5 : 1 beträgt;
e) ein oder mehrere Steuereinheiten zur Steuerung des Durchsatzes der ersten und/oder zweiten Pumpe, wobei das erste oder zweite Steuerungsmittel periodisch das Verhältnis des ersten Durchsatzes zu dem zweiten Durchsatz ändert, sodass sich die Geschwindigkeit und damit der Druck des kontinuierlichen Stroms des ozonhaltigen Gases periodisch in der Behandlungskammer ändert.

3. Die Vorrichtung nach Anspruch 2, wobei die einen oder mehreren Steuerungsmittel periodisch den Durchsatz vermindern, gefolgt von einer Erhöhung des Durchsatzes der Pumpe.

4. Die Vorrichtung nach Anspruch 3, wobei die Reduktion und Erhöhung des Durchsatzes mit einer Frequenz von 1 bis 200 Zyklen pro Minute erfolgt.

5. Die Vorrichtung nach einem der Ansprüche 2 bis 4, wobei das ozonhaltige Gas, das von dem Ozongenerator erzeugt wird, eine Ozonkonzentration von 50 bis 20.000 ppm aufweist.

6. Die Vorrichtung nach einem der Ansprüche 2 bis 5, wobei das Gas Luft ist mit einem Sauerstoffgehalt im Bereich von 20 bis 99 Volumenprozent.

7. Die Vorrichtung nach einem der Ansprüche 2 bis 6, wobei die erste Pumpe eine Pumpleistung im Bereich von 1 bis 10 Liter pro Minute aufweist.

8. Die Vorrichtung nach einem der Ansprüche 2 bis 7, wobei die zweite Pumpe eine Pumpleistung im Bereich von 1,5 bis 15 Liter pro Minute aufweist.

9. Die Vorrichtung nach einem der Ansprüche 2 bis 8, die ferner eine Feuchtigkeitsfalle umfasst, die stromab von der Auslassöffnung des Applikators und stromauf von der zweiten Pumpe angeordnet ist.

10. Die Vorrichtung nach einem der Ansprüche 2 bis 9, die ferner ein Ozonabfangmittel umfasst, das stromab von der zweiten Pumpe angeordnet ist.

11. Die Vorrichtung nach Anspruch 2, wobei die einen oder mehreren Steuerungsmittel periodisch das Verhältnis des zweiten Durchsatzes zu dem ersten Durchsatz ändern in einem Bereich von 6 : 1 zu 1,5 : 1, sodass sich die Leistung und/oder Druck des kontinuierlichen Stroms des ozonhaltigen Gases periodisch in der Behandlungskammer ändert.

## Revendications

1. Applicateur dentaire (3) pour plusieurs dents, pour le traitement de tissu dentaire dur et mou avec un flux continu de gaz contenant de l'ozone, ledit applicateur ayant une surface apte à former avec le tissu dentaire dur et mou de plusieurs dents à traiter une chambre de traitement qui présente un orifice d'admission pour réaliser une communication de fluide avec un générateur d'ozone (2) et une première pompe (1), et un orifice de sortie pour être en communication de fluide avec une seconde pompe destinée à évacuer le gaz de la chambre de traitement, étant précisé que l'applicateur est préfabriqué par moulage par injection.

2. Dispositif pour traiter un tissu dentaire avec un flux continu de gaz contenant de l'ozone, comprenant
a) un générateur d'ozone (2) pour générer un gaz contenant de l'ozone,
b) une première pompe (1) en communication de fluide avec le générateur d'ozone pour générer un flux de gaz contenant de l'ozone,
c) un applicateur (3) tel que défini par la revendication 1,
d) une seconde pompe (5) en communication de fluide avec l'orifice de sortie de l'applicateur pour évacuer le gaz de la chambre de traitement, la seconde pompe ayant un second débit et la première ayant un premier débit, et le rapport du second débit sur le premier étant d'au moins 1,5:1 ;
e) un ou plusieurs moyens de commande pour commander le débit des première et/ou seconde pompes, étant précisé que le ou les moyens de commande modifient périodiquement le rapport du second débit sur le premier, de sorte que la vitesse et par conséquent la pression du flux continu de gaz contenant de l'ozone varie périodiquement dans la chambre de traitement.

3. Dispositif selon la revendication 2, étant précisé que le ou les moyens de commande réduisent périodiquement le débit puis augmentent le débit de la pompe.

4. Dispositif selon la revendication 3, étant précisé que la réduction et l'augmentation du débit ont lieu à une fréquence de 1 à 200 cycles par minute.

5. Dispositif selon l'une quelconque des revendications 2 à 4, étant précisé que le gaz contenant de l'ozone qui est généré par le générateur d'ozone a une concentration d'ozone de 50 à 20000 ppm.

6. Dispositif selon l'une quelconque des revendications 2 à 5, étant précisé que le gaz est constitué par de l'air avec une teneur en oxygène située dans la plage de 20 à 99% en volume.

7. Dispositif selon l'une quelconque des revendications 2 à 6, étant précisé que la première pompe a une vitesse de pompage située dans la plage de 1 à 10 l/min.

8. Dispositif selon l'une quelconque des revendications 2 à 7, étant précisé que la seconde pompe a une vitesse de pompage située dans la plage de 1,5 à 15 l/min.

9. Dispositif selon l'une quelconque des revendications 2 à 8, qui comprend par ailleurs un moyen formant piège à humidité en aval de l'orifice de sortie de l'applicateur et en amont de la seconde pompe.

10. Dispositif selon l'une quelconque des revendications 2 à 9, qui comprend par ailleurs un moyen d'évacuation d'ozone en aval de la seconde pompe.

11. Dispositif selon la revendication 2, étant précisé que le ou les moyens de commande modifient périodiquement le rapport du second débit sur le premier dans une plage de 6:1 à 1,5:1 de sorte que la vitesse et/ou la pression du flux continu de gaz contenant de l'ozone varie périodiquement dans la chambre de traitement.
